(19) Europäisches Patentamt
European Patent Office
Office européen des brevets

(11) Publication number: 0 145 185
A2

# (12) EUROPEAN PATENT APPLICATION

(21) Application number: 84307172.1

(22) Date of filing: 18.10.84

(51) Int.Cl.[4]: B 23 D 21/14

(30) Priority: 21.10.83 US 544166

(43) Date of publication of application:
19.06.85 Bulletin 85/25

(84) Designated Contracting States:
BE CH FR GB IT LI SE

(71) Applicant: WESTINGHOUSE ELECTRIC CORPORATION
Westinghouse Building Gateway Center
Pittsburgh Pennsylvania 15235(US)

(72) Inventor: Nokovich, Nick
RD No. 4, Box 136
Salem Pennsylvania(US)

(74) Representative: van Berlyn, Ronald Gilbert
23, Centre Heights
London, NW3 6JG(GB)

## (54) Precision internal tube cutter.

(57) A precision tube cutter by which tubes can be severed without burrs, roughness, or distortion at the severed tube ends, and which is particularly adapted for use in the reconstitution of fuel assemblies of nuclear reactors. In a first embodiment, the tube cutter (40) includes a body (42) having a stem (50) threadedly secured within a bore (44) extending into the upper end of the body. The conical inner end (54) of the stem (50) is adapted for engagement with a pair of diametrically opposed slides (56) for actuating cutting wheels (58) thereon into engagement with the surrounding tube. The slides (56) and cutting wheels (58) are urged toward their inward retracted positions by return springs (62). A second embodiment of the tube cutter (80) incorporates a slidable pin (82) within an eccentric lower bore (84) for actuating a single slide (56') and cutting wheel (58'). The slides are disposed in an area of the body which is smaller in diameter than the body end portions to avoid friction.

EP 0 145 185 A2

./...

Croydon Printing Company Ltd.

24
32
22
28
28
20
12
14
16
10
18
30
30
26

Fig.1

# PRECISION INTERNAL TUBE CUTTER

## BACKGROUND OF THE INVENTION

The present invention relates generally to an internal pipe or tube cutter. More particularly, this invention concerns a precision internal tube cutter which is especially adapted for circumferentially cutting the walls of control rod guide thimbles or sleeves interconnecting the top nozzles and uppermost grids in fuel assemblies of a nuclear reactor substantially.

Nuclear reactors of the type utilized in power generation incorporate a large number of fuel assemblies arranged in a suitable configuration. Each fuel assembly includes numerous fuel rods, each of which comprises a stack of fuel pellets inside a tube sealed by end plugs. The fuel rods are held in an organized array by a "skeleton" comprising grids spaced at lengthwise intervals, control rod guide thimbles interconnecting the grids and extending beyond the ends of the fuel rods, and top and bottom nozzles. Each guide thimble may be surrounded by a sleeve at the ends for interconnecting the nozzle and adjacent grid.

The metal tubes of the fuel rods thus constitute the primary containment boundary for the radioactive nuclear fuel therein. During initial installation and periodic shutdown of the reactor for refueling, the fuel rods are inspected for damage which might allow leakage and thus contamination of the primary coolant. Fuel rods may develop cracks, pin holes, or other defects during service which must be detected, which is difficult because the fuel rods are part of the integral fuel assemblies and because irradiated fuel assemblies must be submerged in neutron absorbing liquid such as water. When such defects are detected, it is often necessary to remove and replace the entire fuel assembly, because attempted repair often causes further damage which renders it unfit for further use. This, of course, is extremely time-consuming and expensive. Fuel assemblies incorporating special design features to facilitate reconstitution have been developed; however, such features add more expense and complication, and, besides, they are unnecessary if the need for reconstitution does not arise.

As a result, there are many partially spent fuel assemblies stored in reactor plant spent fuel pools which have sustained damage and/or contain leaking fuel rods. These assemblies, which usually have weld-attached top nozzles, are unacceptable for reinsertion into the reactors by reason of their defective fuel rods. If the weld-attached nozzles on these assemblies could be removed in such a manner as to permit reattachment of the removed nozzles or of replacement nozzles, they could be salvaged and reinserted into the reactors for the balance of their normal design life. Other potential advantages could be realized if the nozzles could be reattached to irradiated assemblies, such as for rearrangement or replacement of the selected fuel rods for extended burnup.

A method has been developed by Westinghouse Electric Corporation for remounting nozzles on irradiated assemblies. However, to remount nozzles it is necessary to have a reliable precision means of cutting the tubes or grid sleeves of the guide thimbles without producing chips, burrs or distortions that could interfere with mounting the close-tolerance holes in the nozzle adapter plate over the cut ends of the grid sleeves. Because of the precision required, it is not feasible to cut the grid sleeves simultaneously. The close spacing of the grid sleeves does not permit precision external cutting, either simultaneously or individually. A variety of devices have been developed heretofore for tooling the interiors of pipes or the like; however, the prior art devices have not been suitable or adapted for use in such an application for this purpose.

The invention has for its principal object to provide a precision internal tube cutter which alleviates the problem of nozzle removal and thus makes it possible, at less cost and in a rapid, straightforward manner, to reconstitute fuel assemblies which do not incorporate special design features to facilitate such reconstitution.

Thus, the invention provides a tube cutter which is particularly adapted for use in cutting, from the inside, the metal guide thimbles or sleeves interconnecting the top nozzles and uppermost grids in partially spent fuel assemblies of a nuclear reactor to facilitate reconstitution. In a first embodiment of the invention, the tube cutter includes a cylindrical body with an axial bore extending into one end thereof. Rotatable cutting wheels are mounted on opposing slides which are movable radially outward to extended positions, responsive to inward axial movement of a stem threadedly secured in the bore. The stem includes a conical inner end which engages the angled inner ends of the slides and actuates them outwardly. The slides and cutting wheels are normally urged radially inward to retracted positions by springs. The upper ends of the cylindrical body and stem preferably include tool surfaces thereon to facilitate operation of the tube cutter.

In a second embodiment, which is adapted for tubes of smaller internal diameters, a single slide, rotatable cutting wheel and corresponding spring are utilized. The slide is actuated outwardly by means of a pin in an offset longitudinal bore, which pin in turn is actuated inwardly by the stem threadedly secured in the axial bore at the upper end of the cylindrical body. A return spring is provided for urging the pin away from the slide to facilitate retraction of the cutting wheel.

The preferred embodiment of the invention will now be described, by way of example, with reference to the accompanying drawings, in which:

Figure 1 is a side view (partially cut away) of a fuel assembly of the type utilized in a nuclear power generating plant;

Figure 2 is a front view of a precision tube cutter embodying the invention;

Figure 3 is a side view (partially cut away) of the tube cutter shown in Fig. 2;

Figure 4 is a top view of the tube cutter shown in Figs. 2 and 3;

Figure 5 is an enlarged cross-sectional view taken along lines 5-5 of Fig. 3;

Figure 6 is a front view (partially cut away) of a tube cutter incorporating a further embodiment of the invention; and

Figures 7 and 8 are enlarged cross-sectional views taken along lines 7-7 and 8-8, respectively, of Fig. 6.

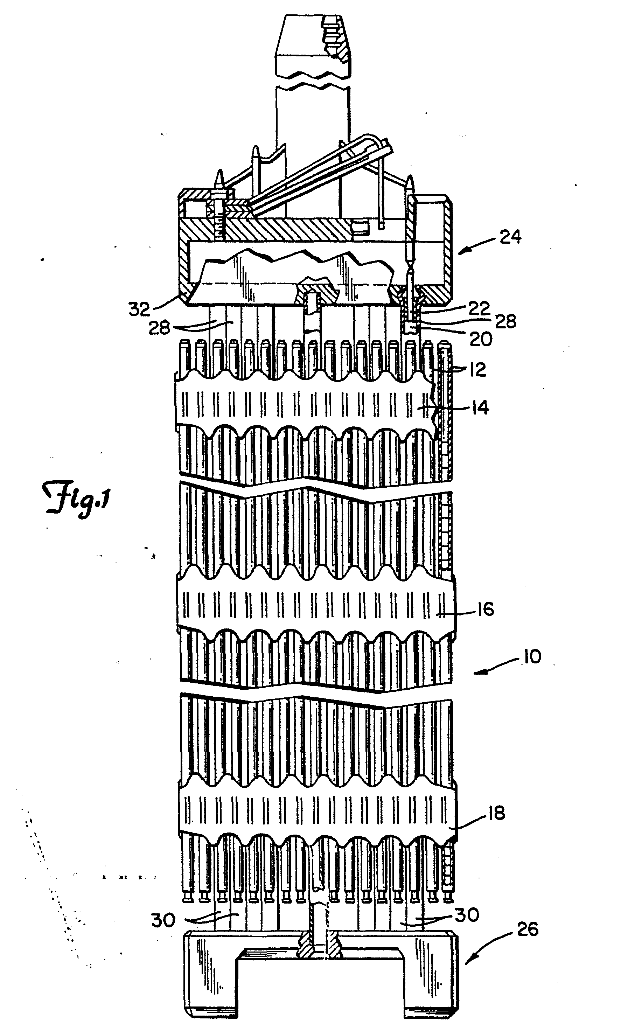

Referring now to the drawings wherein like reference numerals designate like or corresponding elements throughout the views, and particularly referring to Fig. 1, the fuel assembly 10 shown therein includes an array of fuel rods 12 held in parallel, closely spaced relation by grids 14, 16 and 18 (only three of which are shown) located at intervals along the length of the assembly. The fuel rods 12 are typically held in axial position relative to the grids 14, 16 and 18 by springs (not shown) in the grids. The grids 14, 16 and 18 are rigidly interconnected by control-rod guide tubes or thimbles 20 in which control rods 22 are reciprocally movable for controlling the fission process. The guide thimbles 20 extend the full length of the fuel assembly 10 between a top nozzle 24 and a bottom nozzle 26. Each guide thimble 20 in turn is secured by welds or bulge fits (not shown) at opposite ends to external sleeves 28 and 30 interconnecting the nozzles 24 and 26, and adjacent grids 14 and 18, respectively. The ends of the guide thimbles 20 are thus secured to surrounding tubes or sleeves 28 and 30, which in turn are secured between the associated nozzle and adjacent grid. As will be explained more fully hereinafter, the present invention is directed to a precision tube cutter which is particularly adapted for insertion into the upper ends of the guide thimbles 20, after removal of the control rods 22, for precisely cutting the sleeves 28 adjacent the adapter plate 32 of the top nozzle 24, without burrs, roughness, or distortion of the severed ends in order to facilitate removal of the top nozzle and reconstitution of the fuel assembly 10.

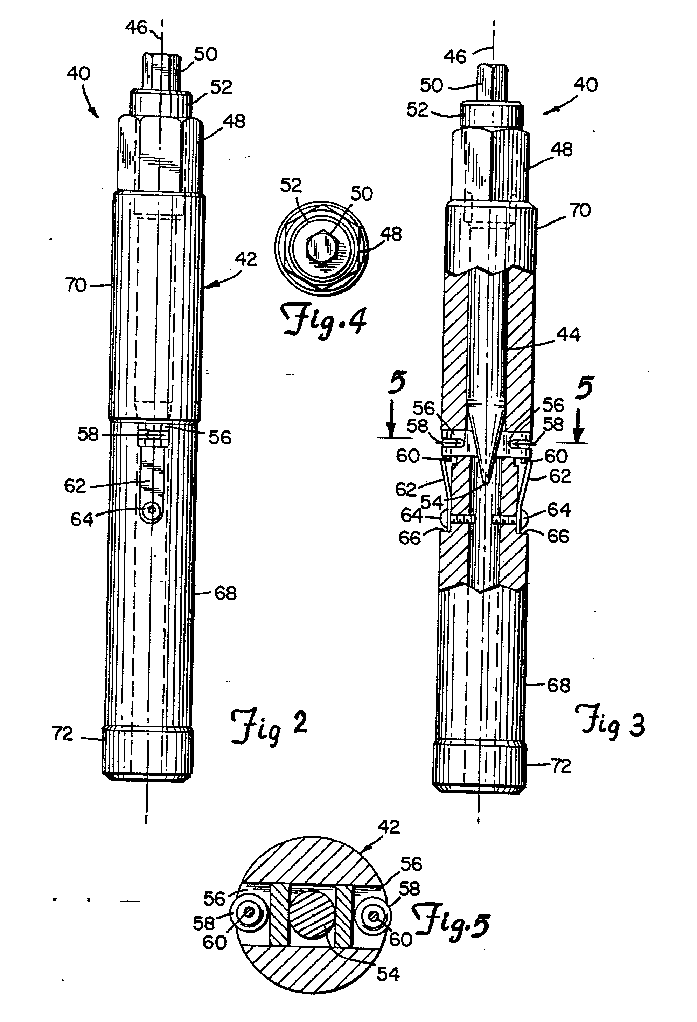

Referring now to Figs. 2-5, there is shown a tube cutter 40 representing a first embodiment of the invention. The tube cutter 40 comprises a generally cylindrical housing or body 42 with a coaxial bore 44 therein. The body 42 is formed of a non-corrosive, anti-galling stainless steel alloy such as Nitronic-60 manufactured by ARMCO. As shown, the coaxial bore 44 extends completely through the body 42; however, a closed bore extending only into the top end of the body and not extending completely through to the bottom end, could also be utilized. Line 46 represents the longitudinal axis of the body 42. The outside diameter of the body 42 is preferably dimensioned for guiding receipt within the tube or sleeve to be circumferentially cut. Opposite pairs of flats or tool surfaces 48 are provided on the upper end of the body 42 to facilitate operation of the tube cutter 40, as will be explained more fully hereinafter.

A stem 50 is threadedly secured in the outer end of the bore 44 for axial movement within body 42. The upper end of the stem 50 includes a flange 52 which functions as a stop for limiting inward movement thereof. The inner end of the stem 50 comprises a conical tip 54 adapted

0145185

for engaging the inclined inner ends of a pair of diametrically opposed slides 56 mounted in corresponding radial notches formed in the body 42.

Each slide 56 includes a rotatable cutting wheel 58 disposed in a slot and mounted on an axle pin 60. The use of rolling cutter elements, as opposed to fixed cutter elements, comprises an important feature of the invention. The use of cutting wheels 58 helps to achieve higher precision without causing burrs, roughness or distortion during cutting. The cutting wheels 58 of the tube cutter 40 protrude outwardly from the slides 56 and define a cutting plane substantially perpendicular to the axis 46 when the tube cutter 40 is rotated about that axis. The lower end of each axle pin 60 protrudes beneath its associated slide 56 and is engaged by the free end of a leaf spring 62 which is secured by a screw 64 recessed within a notch 66 formed into the outside of the body 42. As is best seen in Fig. 3, indentations are provided in the notches 66 for receiving the lower ends of axle pins 60 when the slides 56 and cutting wheels are fully retracted.

The slides 56 and cutting wheels 58 are therefore mounted for radial movement relative to the body 42, and are normally urged toward their inward retracted positions by springs 62. During cutting operation however they are forced automatically with a considerable force which causes slight deformation of the tube to be cut so that the free inside diameter is reduced which might inhibit rotation of the body 42. Therefore, as shown in Fig. 3, the slides 56 and notches 66 are located in a reduced portion 68 between upset end portions 70 and 72 of the tube cutter body 44 such that the cutting wheels 58, when the slides are in their inward positions, do not protrude beyond the end portions by which the tube cutter 40 is guided into the tube to be cut. Stem 50 is shown in the full inward position with cutting wheels 58 fully extended.

The tube cutter 40 operates as follows. One or more tube cutters 40 would typically be mounted on another tool or fixture (not shown) for proper location relative to the tube to be cut. Multiple tube cutters 40 can be mounted on a fixture for location and actuation in unison. After insertion into the tube(s) to be cut, the stem 50 is rotated clockwise a predetermined fraction of a turn or number of turns, depending upon the pitch of the threads interconnecting the stem and body 42, into the body to cam-actuate the slides 56 and wheels 58 outwardly, after which the tube cutter body is turned several revolutions to effect cutting. This incremental procedure is followed until the stem 50 reaches the end of its mechanical travel, which can be adjusted for various tube wall thicknesses by placing a shim spacer (not shown) under the stem flange 52 to ensure that the tube wall is severed precisely without overtravel of the cutting wheels 58. At the completion of the cut, the stem 50 is counter-rotated out from the body 44, whereupon the slides 56 and cutting wheels 58 are retracted by springs 62. The tube cutter 40 can then be safely withdrawn from the severed tube.

If desired, a resilient collar (not shown) of polyurethane or the like can be provided about the reduced portion 68 of the tube cutter 40 beneath springs 62 to prevent any particles or by-products from the cutting operation from falling downwardly.

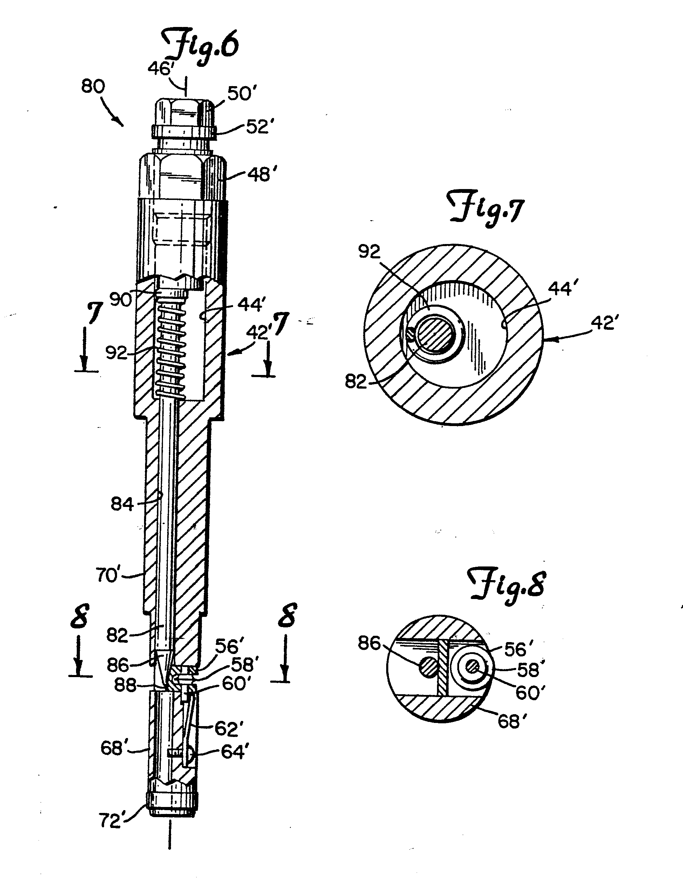

Referring now to Figs. 6-8, there is shown a tube cutter 80 representing a second embodiment of the invention which is adapted for use in relatively smaller tubes. For example, the tube cutter 40 shown in Figs. 2-5 is suitable for cutting tubes with inside diameters of about 2.54 cm. or more, while the tube cutter 80 shown in Figs. 6-8 can be used for cutting tubes with inside diameters between about 0.95 cm. and 2.54 cm. Both embodiments of the tube cutter herein are preferably formed of stainless steel for corrosion resistance. The tube cutter 80 includes several elements which are substantially identical in construction and operation to elements of the tube cutter 40. Such identical components have been designated in Figs. 6-8 with the same reference numerals as employed in describing the tube cutter 40, but have been differentiated therefrom by means of a prime (').

The primary difference between the two embodiments resides in the fact that the tube cutter 80 incorporates only a single slide 56' and associated cutting wheel 58', axle pin 60', and return spring 62'. The slide 56' and cutting wheel 58' are actuated by a pin 82 positioned in an eccentric or offset longitudinal bore 84. The conical inner end 86 of the pin 82 engages the inclined inner end 88 of the slide 56'. The upset upper end 90 of the pin 82 is adapted for engagement with the inner end of the stem 50' to actuate the pin inwardly so that the single slide 56' and cutting wheel 58' are advanced radially outward. The pin 82 is normally urged away from the slide 56' by a second return spring 92 provided in the counterbore 44' in order to facilitate retraction of the cutting wheel 58' by the first return spring 62'. Stem 50' is shown in an outward position, with the cutting wheel 58' retracted. Instead of a single stem with a conical inner end for simultaneously engaging two diametrically opposed slides with cutting wheels thereon, the tube cutter 80 incorporates the separate pin 82 and the second return spring 92 for actuating the single slide 56' and cutting wheel 58'. In all other respects, the tube cutter 80 is substantially identical in construction and function to the tube cutter 40 described above.

From the foregoing, it will be apparent that the present invention comprises an improved internal tube cutter having several advantages over the prior art. By means of the tube cutter herein, tubes can be precisely severed from the inside substantially without burrs, roughness or deformation at the severed tube ends. The tube cutter herein is well suited for use in tubes of relatively small diameter, and is particularly adapted for use in applications, such as the reconstitution of fuel assemblies in nuclear power plants, wherein extreme precision is required. Other advantages will be evident to those skilled in the art.

Although particular embodiments of the invention have been illustrated in the accompanying drawings and described in the foregoing detailed description, it will be understood that the invention is not limited to the embodiments disclosed, but is intended to embrace any alternatives, equivalents, substitutions and/or rearrangements of elements falling within the scope of the invention as defined by the following claims.

CLAIMS:

1. A precision internal tube cutter for circumferentially cutting thin-walled tubes from within, said cutter comprising an elongate body (42) adapted for insertion into and for rotation in a tube to be cut, said body (42) having a longitudinal bore (44) formed therein from one end thereof; a stem (50) extending into the longitudinal bore (44) from said one end of the elongate body (42); means for effecting axial movement of the stem (50) within the bore (44); at least one slide (56) supported in the elongate body (42) for sliding movement radially inward to a retracted position and radially outward to a cutting position, said or each slide carrying a cutting wheel (58) which is rotatable about an axis substantially parallel with the longitudinal axis of the elongate body (42); means for converting inward axial movement of the stem (50) into outward radial movement of the or each slide (56); and means effective upon outward axial movement of the stem to restore the or each slide from the cutting position to the retracted position, characterized in that said elongate body (42) has opposite end portions (70, 72) of a diameter corresponding to the diameter of the tube to be cut so as to be rotatably supported in said tube when disposed therein, and an intermediate section (68) which is smaller in diameter than the tube to be cut so as to provide clearance therebetween, and that said slides (56, 58) are disposed in the intermediate body section.

2. A precision internal tube cutter according to claim 1, characterized in that said means for effecting axial movement of the stem comprises an externally threaded portion of the stem (50) which is threadedly engaged with an internally threaded wall portion of the longitudinal bore (44), and an end portion of the stem (50) at said one end of the body adapted to receive a tool for rotating the stem (50) about its longitudinal axis.

3. A precision internal tube cutter according to claim 1 or 2, characterized in that said stem (50) has a stop (52) disposed thereon adjacent said one end of the body (42) and cooperating with the latter to limit axial inward movement of the stem (50) relative to said body (42).

4. A precision internal tube cutter according to claim 1, 2 or 3, characterized in that said body (42) includes an end portion formed adjacent said one end thereof to receive a tool for rotating the tube cutter about its longitudinal axis.

5. A precision internal tube cutter according to any one of the preceding claims, characterized in that the means for restoring said or each slide to its retracted position comprises a leaf spring (62) secured to said body (42) and including a resilient portion bearing against said or the associated slide (56) in a direction toward its retracted position.

6. A precision internal tube cutter according to claim 5, characterized in that said or each slide (56) supports the cutting wheel (58) thereon by means of an axle pin (60) having a portion which protrudes from the slide (56) toward the biasing spring (62) associated therewith, said biasing spring (62) cooperating with the protruding portion of the axle pin (60) to bias the slide (56) toward its retracted position.

7. A precision internal tube cutter according to claim 5 or 6, characterized in that said biasing spring together with the means for securing it to said elongate body (42) is recessed within a notch formed in an outer peripheral portion of the intermediate section of said elongate body (42).

8. A precision internal tube cutter according to any one of the preceding claims, characterized in that the cutting wheel associated with said or the respective slide is disposed within a slot formed in the slide adjacent the radially outer end thereof.

9. A precision internal tube cutter according to any one of the preceding claims, characterized in that said means for converting inward axial movement of the stem (50) into outward radial movement of said or each slide (56) comprises an inclined surface formed on the radially inner end of the slide, and a conical end portion of the stem (50) within the longitudinal bore (44) which conical end portion cooperates with the inclined surface of said or each slide (56) to cam-actuate the latter radially outward upon axial inward movement of the stem (50).

10. A precision internal tube cutter according to any one of the preceding claims especially for cutting small diameter tubes, characterized in that said longitudinal bore (44) and a pin (82) therein extend off-center toward one side of said elongate body (42') and a single cutting wheel (58') is supported in a single slide (56') disposed at the other side of said elongate body (42'), that said pin (82) projects off-center into a cavity (44') centrally formed into said elongate body (42') and a stem 50' extends movably into said cavity (44') said pin being biased by a spring (92) into engagement with said stem (50').

11. A precision internal tube cutter according to any one of the preceding claims, characterized in that said elongate body consists of a non-corrosive anti-galling stainless steel alloy.

24
32
28
22
28
20
12
14
16
10
18
30
30
26

Fig.1

46
50
40
52
48
42
70
58
56
62
64
68
72
Fig 2
52
50
48
Fig.4
46
50
40
52
48
70
44
5
5
56
58
60
62
54
64
66
68
72
Fig 3
42
56
58
60
54
Fig.5

Fig.6
80
46'
50'
52'
48'
90
44'
7
7
42'
92
84
70'
8
8
82
56'
86
58'
88
60'
62'
68'
64'
72'
Fig.7
92
44'
42'
82
Fig.8
86
56'
58'
60'
68'